# EUROPEAN PATENT SPECIFICATION

(11) **EP 0 789 045 B1**
(45) Date of publication and mention of the grant of the patent: **10.01.2001**
(21) Application number: 96927207.9
(22) Date of filing: 20.08.1996
(51) Int. Cl.: C08G 63/83, C08G 63/06

(54) **PROCESS FOR PRODUCING POLYHYDROXY CARBOXYLIC ACID**
VERFAHREN ZUR HERSTELLUNG VON POLYHYDROXYCARBONSÄURE
PROCESSUS DE PRODUCTION D'ACIDE POLYHYDROXY CARBOXYLIQUE

(30) Priority: 29.08.1995 JP 22003095; 12.09.1995 JP 23432095
(43) Date of publication of application: 13.08.1997
(73) Proprietor: KYOWA HAKKO KOGYO CO., Ltd., Chiyoda-ku, Tokyo 100 (JP)
(72) Inventor: YANAGISAWA, Norio, Mie 510 (JP); MURAYAMA, Toshikazu, Mie 510 (JP); TSUZAKI, Nobuko, Mie 510 (JP); YOKOMORI, Yorozu, Mie 510 (JP)
(74) Representative: VOSSIUS & PARTNER
(86) International application number: JP9602326
(87) International publication number: WO9708220

(56) References cited:
- EP-A- 0 172 636
- DE-A- 4 418 643
- JP-A- 5 271 051
- JP-A- 6 306 149
- JP-A- 61 111 326

## Description

The present invention relates to a process for producing polyhydroxycarboxylic acids, specifically, those having a weight-average molecular weight of 50,000 or above. Said polyhydroxycarboxylic acids are useful as biodegradable plastics for food-wrapping films, beverage bottles, drug delivery systems, etc.

The following two methods are known as methods for producing polyhydroxycarboxylic acids by polymerizing hydroxycarboxylic acids such as lactic acid and glycolic acid: one is ring-opening polymerization of cyclic dimers of hydroxycarboxylic acids such as lactide and glycolide, and the other of direct dehydration condensation of hydroxycarboxylic acids.

As an example of the process which involves ring-opening polymerization of cyclic dimers of hydroxycarboxylic acids, Japanese Published Examined Patent Application No. 14688/81 discloses a process for producing copolymers of lactic acid and glycolic acid having an average molecular weight of 72, 000 by copolymerizing, in the presence of stannous octanoate, a mixture of lactide and glycolide respectively obtained by dehydration polycondensation of lactic acid and glycolic acid. Japanese Published Unexamined Patent Application No. 69553/90 discloses polylactic acids and polyglycolic acids having molecular weights of 10,000-800,000, and also discloses, as an example of polylactic acid synthesis, a process for producing polylactic acids of molecular weights of 100,000 by subjecting DL-lactide to ring-opening polymerization in the presence of stannous octanoate catalyst.

Polyhydroxycarboxylic acids of high molecular weights can be obtained by these processes that involve ring-opening polymerization of cyclic dimers of hydroxycarboxylic acids. However, such processes have various problems for industrial utilization; that is, they are complicated with many steps, the yield of polymers produced is low, and the cost rises as a result.

On the other hand, processes by direct dehydration polycondensation of hydroxycarboxylic acids are industrially advantageous with fewer steps, high yield and low cost. However, these processes are not applicable to the production of polyhydroxycarboxylic acids of high molecular weights. As an example of the improved process of this direct dehydration condensation, Japanese Published Unexamined Patent Application No. 28521/86 discloses a process for producing polymers or copolymers of lactic acid and glycolic acid having a weight-average molecular weight of more than 5,000, usually 5,000-30,000, by subjecting lactic acid and/or glycolic acid to polycondensation reaction in the presence or absence of an inorganic solid acid catalyst such as acid clay, activated clay, bentonite, kaolin, talc, aluminum silicate, magnesium silicate, aluminum borate, or silicic acid.

The weight-average molecular weight of the polymers or the copolymers produced by said process is around 30,000 at most. Even polymers or copolymers of weight-average molecular weight at such level may be considered to be satisfactory in physical properties as polymers to be used in bioabsorbable pharmaceutical compositions which are objective of said process, but they are dissatisfactory in physical properties as biodegradable plastics. Japanese Published Examined Patent Application No. 52930/90 discloses a process for producing polylactide having a molecular weight of at least 4,000, usually 4,000-20,000 by subjecting lactic acid to polycondensation reaction in the absence of a catalyst at a temperature of 220-260°C and at a pressure of less than 10 mmHg. Japanese Published Examined Patent Application No. 13963/93 discloses a process for producing polyglycolide or polylactide having a molecular weight of 8,000-11,000 by adding a phosphoric acid compound or a phosphorous acid compound when the molecular weight of lactic acid or glycolic acid subjected to polycondensation reaches 2,000-6,000 in the presence of a tin compound.

Japanese Published Unexamined Patent Application No. 65360/94 discloses a process for producing polyhydroxycarboxylic acids having a weight-average molecular weight of more than 15,000, usually 5,000-200,000, by subjecting hydroxycarboxylic acids or oligomers thereof to dehydration polycondensation reaction in a reaction mixture containing an organic solvent substantially in the absence of water.

In this process, a catalyst is not necessarily used, but the use of a catalyst can accelerate the reaction. Metals belonging to II, III, IV, and V groups of the periodic table, and oxides or salts thereof are mentioned as catalysts. The use of an organic solvent in the reaction necessitates an additional complicated step to distil the organic solvent in this process.

The present invention provides a process for producing polyhydroxycarboxylic acids, specifically, polyhydroxycarboxylic acids having a weight-average molecular weight of 50,000 or above by subjecting hydroxycarboxylic acids or oligomers thereof to polycondensation in the presence of an inorganic solid acid catalyst in combination with an alkali metal compound catalyst or an alkaline earth metal compound catalyst.

The polyhydroxycarboxylic acids prepared by the present invention include polymers of hydroxycarboxylic acids, and copolymers of hydroxycarboxylic acids.

The hydroxycarboxylic acids suitable for use in the present invention are aliphatic hydroxycarboxylic acids having 2-6 carbon atoms such as lactic acid, glycolic acid, hydroxybutyric acid, hydroxyvaleric acid, and hydroxycaproic acid, which may be in any of the D-, L-, and DL- forms. Usually, commercially available hydroxycarboxylic acids are used.

The hydroxycarboxylic acids may be used in combination with cyclic dimers thereof.

As the oligomers of hydroxycarboxylic acids, oligomers having a molecular weight of 300-3,000 are used, which can be usually produced by subjecting hydroxycarboxylic acids to dehydration polycondensation.

The polymers of hydroxycarboxylic acids are prepared by using a single kind of hydroxycarboxylic acid. The copolymers of hydroxycarboxylic acids are prepared from a mixture of 2 or more kinds of hydroxycarboxylic acids, or a mixture of at least one kind of hydroxycarboxylic acid and at least one kind of cyclic compound derived from hydroxycarboxylic acid, i.e. a mixture of at least one kind of hydroxycarboxylic acid such as glycolic acid or lactic acid and at least one kind of cyclic compound derived from hydroxycarboxylic acid such as γ-butyrolactone or ε-caprolactone.

The hydroxycarboxylic acids may be used in the form of a solid, an aqueous solution, etc. Usually, commercially available 50-90% aqueous solutions are used.

As the inorganic solid acid catalysts, catalysts which are mainly composed of silica or alumina, such as aluminum silicate, silica gel, zeolite, aluminum oxide, magnesium silicate, activated clay, acid clay, aluminum borate, bentonite, kaolin, talc, and silicate are used. Usually, commercially available ones are used.

The inorganic solid acid catalyst can be added as it is or as a dispersion in a solvent such as toluene or xylene, at the start of reaction together with starting materials or in the course of reaction.

The inorganic solid acid catalyst is used in an amount of 0.03-10 wt%, preferably 0.5-7 wt%, more preferably 1-5 wt% based on the amount of a hydroxycarboxylic acid or an oligomer thereof, in one to several portions.

As the alkali metal compound catalysts or the alkaline earth metal compound catalysts, inorganic acid addition salts such as carbonate and bicarbonate, organic acid addition salts such as hydroxycarboxylate (e.g. lactate and glycolate) and acetate, oxides, hydroxides, etc. of alkali metals such as lithium, sodium, and potassium, or alkaline earth metals such as magnesium and calcium are used.

The alkali metal compound catalyst or the alkaline earth metal compound catalyst is added to a reaction mixture in such an amount that the concentration of the alkali metal or the alkaline earth metal eluted in the solution mixture becomes 10-10,000 ppm, preferably 100-3,000 ppm.

As the catalysts to be used in the process of the present invention, the following catalyst (1), (2) and (3),in which an inorganic solid acid catalyst is combined with an alkali metal compound catalyst or an alkaline earth metal compound catalyst, are mentioned.
(1) An inorganic solid acid catalyst is treated with an aqueous solution of an alkali metal compound catalyst or an alkaline earth metal compound catalyst such as carbonate, bicarbonate or hydroxide to obtain an inorganic solid acid catalyst carrying an alkali metal compound catalyst or an alkaline earth metal compound catalyst. The metal elution test is carried out in the same manner as in Example 1 to select those in which metal elution is observed, out of the thus obtained inorganic solid acid catalyst carrying an alkali metal compound catalyst or an alkaline earth metal compound catalyst.
(2) Using an inorganic solid acid catalyst which already carries as a component an alkali metal compound catalyst or an alkaline earth metal compound catalyst, the metal elution test is carried out in the same manner as in Example 1. The inorganic solid acid catalyst having metal elution does not need the treatment mentioned in (1) and can be used as it is. An example of such catalysts is zeolite.
(3) An inorganic solid acid catalyst is added to a raw material solution together with an alkali metal compound catalyst or an alkaline earth metal compound catalyst such as carbonate, bicarbonate, hydroxycarboxylate, acetate, hydroxide, or oxide. Alternatively, an alkali metal compound catalyst or an alkaline earth metal compound catalyst such as carbonate, bicarbonate, hydroxycarboxylate, acetate, hydroxide, or oxide is added to a reaction mixture to which an inorganic solid acid catalyst is added.

The polycondensation reaction is usually carried out at 120-150°C for 5-10 hours at atmospheric pressure in a stream of nitrogen to prepare oligomers. The polycondensation reaction after the preparation of oligomers is carried out at 160-250°C, preferably 180-240°C, more preferably 180-220°C, at 0.05-40 mmHg, preferably 0.1-25 mmHg, for 5-50 hours, preferably 10-30 hours.

The polycondensation reaction of the present invention may be carried out by either continuous operation or batch operation. As the viscosity of the reaction mixture becomes high in the latter stage of the polycondensation reaction, the use of a reactor with good stirring efficiency such as a horizontal biaxial processor is preferable.

After the reaction is completed, the reaction product obtained in the molten state is cooled to room temperature to give solidified polyhydroxycarboxylic acid.

The weight-average molecular weight of the polyhydroxycarboxylic acids obtained by the process of the present invention is usually 50,000-300,000, though it varies with the kind and amount of catalysts, reaction temperature, reaction pressure, reaction time, etc.

The obtained polyhydroxycarboxylic acids usually carry 0.03-10 wt% of an inorganic solid acid catalyst and are biodegradable.

For the use in drug delivery systems, polyhydroxycarboxylic acids carrying substantially no inorganic solid acid catalyst are preferable. The polyhydroxycarboxylic acids carrying substantially no inorganic solid acid catalyst (inorganic solid acid catalyst content: less than 0.03 wt%) are obtained by purifying the polyhydroxycarboxylic acids carrying 0.03-10 wt% of an inorganic solid acid catalyst.

Purification can be carried out in the following manner.

A polyhydroxycarboxylic acid carrying an inorganic solid acid catalyst is dissolved in a halogenated hydrocarbon such as chloroform, and the insoluble inorganic solid acid catalyst is removed by filtration. The filtrate is added to a lower alcohol such as isopropanol, and the polyhydroxycarboxylic acid precipitated is separated.

For the use as biodegradable polymers, the polyhydroxycarboxylic acids carrying an inorganic solid acid catalyst or the polyhydroxycarboxylic acids obtained by adding an inorganic solid acid catalyst as a degradation promoter are usually preferable, though the polyhydroxycarboxylic acids carrying substantially no inorganic solid acid catalyst can also be used as biodegradable polymers.

### Examples are shown below.

The weight-average molecular weight of polymers and copolymers was measured in the following manner in Examples and Comparative Examples.

A polymer or copolymer was dissolved in chloroform to obtain a 0.2 wt% solution, and the weight-average molecular weight was measured by gel permeation chromatography (GPC) using standard polystyrene of known molecular weight. As GPC columns, TOSOH G-5000, TOSOH G-3000, and TOSOH G-1000 (TOSOH CORPORATION) connected in series were used, and the measurement was carried out at a temperature of 40°C.

### Example 1

A 90 wt% aqueous solution of L-lactic acid (500 g) was put into a reaction vessel equipped with a stirrer, a Dean-Stark trap, and a nitrogen-introducing tube. After substitution of nitrogen gas was carried out three times, the solution was concentrated at 150°C for 6 hours with stirring in a stream of nitrogen, simultaneously with the removal of the distilled water, to give 365 g of lactic acid oligomer. The molecular weight of this lactic acid oligomer was 235.

The molecular weight was calculated after the lactic acid oligomer was dissolved in acetone and the resulting solution was titrated with 0.1 N KOH ethanol using BTB (Bromothymol Blue) indicator.

To 100 g of the obtained lactic acid oligomer was added 2.1 g of Baylith 5A^{*1} (synthetic zeolite: Kurita Water Industries Ltd.) with which sodium elution (381 ppm) had been observed by the treatment described below. Then, the temperature was raised to 220°C, and the pressure was reduced gradually to 20 mmHg over 30 minutes. The mixture was stirred at 210 ± 10°C for 3 hours. After the pressure was reduced gradually to 1 mmHg over 30 minutes, the mixture was stirred at 210 ± 10°C for 7 hours to give lactic acid polymer in the molten state. The product was cooled to room temperature to give 60.30 g of lactic acid polymer as a light brown solid. The weight-average molecular weight of this polymer was 61,000.
*1 To 100 g of lactic acid oligomer was added 2 g of Baylith 5A (synthetic zeolite), and the mixture was stirred at 80°C for 24 hours in an atmosphere of nitrogen. After addition of chloroform with stirring, the resulting mixture was filtered with a filter paper, followed by filtration using a membrane filter (0.1 µ). After the filtrate was confirmed to be transparent with the naked eye, the amount of alkali metal and alkaline earth metal eluted into the filtrate (lactic acid oligomer) was determined by ICP (inductively coupled plasma) [device: UOP-1 MARK-II (Kyoto Koken Co., Ltd.)]. The determination revealed that the filtrate contained 381 ppm sodium. The same treatment was carried out on the filtered Baylith 5A, and no sodium was detected in the filtrate. Hereinafter, metal elution test on an inorganic solid acid catalyst was carried out in the same manner.

### Example 2

To 100 g of the lactic acid oligomer obtained in the same manner as in Example 1 was added 1.8 g of Baylith 5A with which sodium elution (381 ppm) had been observed. Then, the temperature was raised to 200°C, and the pressure was reduced gradually to 20 mmHg over 30 minutes. The mixture was stirred at 195 ± 5°C for one hour. After the pressure was reduced gradually to 1 mmHg over 30 minutes, the mixture was stirred at 195 ± 5°C for 10 hours to give lactic acid polymer in the molten state. The product was cooled to room temperature to give 59.10 g of lactic acid polymer as a white solid. The weight-average molecular weight of this polymer was 62,000.

### Example 3

A 90 wt% aqueous solution of L-lactic acid (50 g) and 50 g of glycolic acid were put into a reaction vessel equipped with a stirrer and a nitrogen-introducing tube. After substitution of nitrogen gas was carried out three times, the mixture was concentrated at 150°C for 5 hours with stirring in a stream of nitrogen to give 65 g of lactic acid-glycolic acid oligomer. To the obtained oligomer was added 1.3 g of Baylith 5A with which sodium elution (381 ppm) had been observed. Then, the temperature was raised to 210°C, and the pressure was reduced gradually to 20 mmHg over 30 minutes. The mixture was stirred at 210 ± 10°C for 3 hours. After the pressure was reduced gradually to 1 mmHg over 30 minutes, the mixture was stirred at 210 ± 10°C for 7 hours to give lactic acid-glycolic acid copolymer in the molten state. The product was cooled to room temperature to give 23.50 g of lactic acid-glycolic acid copolymer as a light brown solid. The weight-average molecular weight of this copolymer was 65,000.

### Example 4

A 90 wt% aqueous solution of L-lactic acid (90 g) and 10 g of glycolic acid were put into a reaction vessel equipped with a stirrer and a nitrogen-introducing tube. After substitution of nitrogen gas was carried out three times, the mixture was concentrated at 150°C for 5 hours with stirring in a stream of nitrogen to give 50 g of lactic acid-glycolic acid oligomer. To the obtained oligomer was added 1.1 g of Baylith 5A with which sodium elution (381 ppm) had been observed. Then, the temperature was raised to 200°C, and the pressure was reduced gradually to 20 mmHg over 30 minutes. The mixture was stirred at 195 ± 5°C for one hour. After the pressure was reduced gradually to 1 mmHg over 30 minutes, the mixture was stirred at 195 ± 5°C for 7 hours to give lactic acid-glycolic acid copolymer in the molten state. The product was cooled to room temperature to give 29.24 g of lactic acid-glycolic acid copolymer as a white solid. The weight-average molecular weight of this copolymer was 93,000.

### Example 5

A 90 wt% aqueous solution of L-lactic acid (50 g) and 50 g of hydroxybutyric acid were put into a reaction vessel equipped with a stirrer and a nitrogen-introducing tube. After substitution of nitrogen gas was carried out three times, the mixture was concentrated at 120°C for 5 hours with stirring in a stream of nitrogen to give 65 g of lactic acid-hydroxybutyric acid oligomer. To the obtained oligomer was added 1.3 g of Baylith 5A with which sodium elution (381 ppm) had been observed. Then, the temperature was raised to 200°C, and the pressure was reduced gradually to 20 mmHg over 30 minutes. The mixture was stirred at 195 ± 5°C for 3 hours. After the pressure was reduced gradually to 1 mmHg over 30 minutes, the mixture was stirred at 195 ± 5°C for 7 hours to give lactic acid-hydroxybutyric acid copolymer in the molten state. The product was cooled to room temperature to give 28.15 g of lactic acid-hydroxybutyric acid copolymer as a light brown solid. The weight-average molecular weight of this copolymer was 58,000.

### Example 6

Glycolic acid (100 g) was put into a reaction vessel equipped with a stirrer and a nitrogen-introducing tube. After substitution of nitrogen gas was carried out three times, glycolic acid was concentrated at 120°C for 5 hours with stirring in a stream of nitrogen to give 60 g of glycolic acid oligomer. To the obtained oligomer was added 1.2 g of Molecular Sieve 5A (synthetic zeolite: Wako Pure Chemical Industries, Ltd.) with which sodium elution (313 ppm) had been observed. Then, the temperature was raised to 220°C, and the pressure was reduced gradually to 20 mmHg over 30 minutes. The mixture was stirred at 210 ± 10°C for 3 hours. After the pressure was reduced gradually to 1 mmHg over 30 minutes, the mixture was stirred at 210 ± 10°C for 7 hours to give glycolic acid polymer in the molten state. The product was cooled to room temperature to give 26.15 g of glycolic acid polymer as a light brown solid. The weight-average molecular weight of this polymer was 63,000.

### Example 7

To 20.01 g of the lactic acid oligomer obtained in Example 1 was added 0.4 g of synthetic light aluminum silicate (Tomita Pharmaceutical Co., Ltd.) with which sodium elution (490 ppm) had been observed. Then, the temperature was raised to 200°C, and the pressure was reduced gradually to 20 mmHg over 30 minutes. The mixture was stirred at 200 ± 10°C for one hour. After the pressure was reduced gradually to 1 mmHg over 30 minutes, the mixture was stirred at 200 ± 10°C for 9 hours to give lactic acid polymer in the molten state. The product was cooled to room temperature to give 10.24 g of lactic acid polymer as a light brown solid. The weight-average molecular weight of this polymer was 63,000.

### Comparative Example 1

The same procedure as in Example 7 was repeated except that 0.4 g of synthetic light aluminum silicate (Kyowa Chemical Industry Co., Ltd.) with which no sodium elution had been observed was used instead of 0.4 g of synthetic light aluminum silicate (Tomita Pharmaceutical Co., Ltd.) with which sodium elution (490 ppm) had been observed, whereby 10.24 g of lactic acid polymer was obtained as a light brown solid. The weight-average molecular weight of this polymer was 23,000.

### Example 8

To 20.21 g of the lactic acid oligomer obtained in Example 1 were added 0.4 g of synthetic light aluminum silicate (Kyowa Chemical Industry Co., Ltd.) with which no sodium elution had been observed and 0.0541 g of a 90 wt% aqueous solution of sodium lactate (sodium content: 500 ppm). Then, the temperature was raised to 200°C, and the pressure was reduced gradually to 20 mmHg over 30 minutes. The mixture was stirred at 200 ± 10°C for one hour. After the pressure was reduced gradually to 1 mmHg over 30 minutes, the mixture was stirred at 200 ± 10°C for 9 hours to give lactic acid polymer in the molten state. The product was cooled to room temperature to give 9.33 g of lactic acid polymer as a light brown solid. The weight-average molecular weight of this polymer was 51,000.

### Example 9

To 20.02 g of the lactic acid oligomer obtained in Example 1 were added 0.4 g of aluminum silicate N633L (Nikki Chemical Co., Ltd.) with which no sodium elution had been observed and 0.1055 g of magnesium lactate trihydrate (magnesium content: 500 ppm). Then, the temperature was raised to 200°C, and the pressure was reduced gradually to 20 mmHg over 30 minutes. The mixture was stirred at 200 ± 10°C for one hour. After the pressure was reduced gradually to 1 mmHg over 30 minutes, the mixture was stirred at 200 ± 10°C for 9 hours to give lactic acid polymer in the molten state. The product was cooled to room temperature to give 10.24 g of lactic acid polymer as a light brown solid. The weight-average molecular weight of this polymer was 93,000.

### Example 10

To 20.02 g of the lactic acid oligomer obtained in Example 1 were added 0.4 g of synthetic light aluminum silicate [synthetic light aluminum silicate (Tomita Pharmaceutical Co., Ltd.) with which no sodium had been eluted by the same sodium elution treatment as in the treatment of Baylith 5A (synthetic zeolite) in Example 1] and 0.1055 g of magnesium lactate trihydrate (magnesium content: 500 ppm). Then, the temperature was raised to 200°C, and the pressure was reduced gradually to 20 mmHg over 30 minutes. The mixture was stirred at 200 ± 10°C for one hour. After the pressure was reduced gradually to 1 mmHg over 30 minutes, the mixture was stirred at 200 ± 10°C for 9 hours to give lactic acid polymer in the molten state. The product was cooled to room temperature to give 11.46 g of lactic acid polymer as a light brown solid. The weight-average molecular weight of this polymer was 99,000.

### Comparative Example 2

The same procedure as in Example 10 was repeated except that 0.4 g of synthetic light aluminum silicate with which no sodium had been eluted alone was used instead of 0.4 g of synthetic light aluminum silicate with which no sodium elution had been observed and 0.1055 g of magnesium lactate trihydrate (magnesium content: 500 ppm), whereby 11.46 g of lactic acid polymer was obtained as a light brown solid. The weight-average molecular weight of this polymer was 11,000.

### Example 11

To 20.02 g of the lactic acid oligomer obtained in Example 1 were added 0.4 g of the same synthetic light aluminum silicate as used in Example 10 with which no sodium had been eluted and 0.0541 g of a 90 wt% aqueous solution of sodium lactate (sodium content: 500 ppm). Then, the temperature was raised to 200°C, and the pressure was reduced gradually to 20 mmHg over 30 minutes. The mixture was stirred at 200 ± 10°C for one hour. After the pressure was reduced gradually to 1 mmHg over 30 minutes, the mixture was stirred at 200 ± 10°C for 9 hours to give lactic acid polymer in the molten state. The product was cooled to room temperature to give 11.46 g of lactic acid polymer as a light brown solid. The weight-average molecular weight of this polymer was 59,000.

### Example 12

The same procedure as in Example 7 was repeated except that the reaction time under reduced pressure (1 mmHg) was changed from 9 to 29 hours, whereby 8.47 g of lactic acid polymer was obtained as a light brown solid. The weight-average molecular weight of this polymer was 153,000.

The obtained lactic acid polymer passed "Heavy Metal Elution Test" which was carried out according to the general standard test on synthetic resin utensils, containers and packages (Food Hygiene Law, a book of the Six Major Laws, p. 822-853). The result of the potassium permanganate consumption test according to the same general standard test was less than 1 ppm.

The tensile strength and the elongation percentage of a film of the polymer were measured^{*2}, and the results were 410 kg/cm² and 10%, respectively.
*2 The lactic acid polymer was dissolved in chloroform to produce a film having a thickness of 50-100 µ by the casting method. This film was used to prepare No. 2 test pieces in accordance with JISK7127, and the tensile strength and the elongation percentage were measured at a tensile speed of 1 mm/min.

### Example 13

The same procedure as in Example 7 was repeated except that 0.4 g of synthetic light aluminum silicate (Kyowa Chemical Industry Co., Ltd.) with which no sodium elution had been observed and 0.035 g of sodium acetate (sodium content: 500 ppm) were used instead of 0.4 g of synthetic light aluminum silicate (Tomita Pharmaceutical Co., Ltd.) with which sodium elution (490 ppm) had been observed, whereby 9.33 g of lactic acid polymer was obtained as a dark brown solid. The weight-average molecular weight of this polymer was 54,000.

### Example 14

The same procedure as in Example 7 was repeated except that 20.21 g of the lactic acid oligomer obtained in Example 1 and 0.4 g of magnesium silicate (Wako Pure Chemical Industries, Ltd.) with which magnesium elution (432 ppm) had been observed were used respectively instead of 20.01 g of the lactic acid oligomer obtained in Example 1 and 0.4 g of synthetic light aluminum silicate (Tomita Pharmaceutical Co., Ltd.) with which sodium elution (490 ppm) had been observed, whereby 9.33 g of lactic acid polymer was obtained as a dark brown solid. The weight-average molecular weight of this polymer was 54,000.

### Comparative Example 3

The same procedure as in Example 1 was repeated except that 0.0541 g of a 90 wt% aqueous solution of sodium lactate (sodium content: 500 ppm) was used instead of Baylith 5A with which sodium elution (381 ppm) had been observed, whereby 1.33 g of lactic acid polymer was obtained as a dark brown solid. The weight-average molecular weight of this polymer was 4, 000.

The present invention provides polyhydroxycarboxylic acids having a weight-average molecular weight of 50,000 or above which are useful as biodegradable plastics for food-wrapping films, beverage bottles, drug delivery systems, etc.

## Claims

1. A process for producing a polyhydroxycarboxylic acid, which comprises polycondensing a hydroxycarboxylic acid or an oligomer thereof in the presence of an inorganic solid acid catalyst in combination with an alkali metal compound catalyst or an alkaline earth metal compound catalyst.

2. The process according to Claim 1, wherein the inorganic solid acid catalyst is a catalyst which is mainly composed of silica or alumina.

3. The process according to Claim 1, wherein the inorganic solid acid catalyst is aluminum silicate, silica gel, zeolite, aluminum oxide, magnesium silicate, activated clay, acid clay, aluminum borate, bentonite, kaolin, talc, or silicate.

4. The process according to any of Claims 1 to 3, wherein the alkali metal or the alkaline earth metal in the alkali metal compound catalyst or the alkaline earth metal compound catalyst is eluted in a reaction mixture.

5. The process according to any of Claims 1 to 4, wherein the polyhydroxycarboxylic acid has a weight-average molecular weight of 50,000 or above.

6. The process according to any of Claims 1 to 5, wherein the polyhydroxycarboxylic acid is a polyhydroxycarboxylic acid having a weight-average molecular weight of 50,000 or above and carrying 0.03-10 wt% of an inorganic solid acid catalyst.

7. The process according to Claim 5 or 6, wherein the weight-average molecular weight is 50,000-300,000.

## Patentansprüche

1. Verfahren zur Herstellung einer Polyhydroxycarbonsäure, das das Polykondensieren einer Hydroxycarbonsäure oder eines Oligomers davon in Gegenwart eines Katalysators aus einer anorganischen, festen Säure in Kombination mit einem Katalysator aus einer Alkalimetallverbindung oder einem Katalysator aus einer Erdalkalimetallverbindung umfasst.

2. Verfahren nach Anspruch 1, wobei der Katalysator aus einer anorganischen, festen Säure ein Katalysator ist, der hauptsächlich aus Siliciumdioxid oder Aluminiumoxid besteht.

3. Verfahren nach Anspruch 1, wobei der Katalysator aus einer anorganischen, festen Säure Aluminiumsilicat, Silicagel, Zeolith, Aluminiumoxid, Magnesiumsilicat, aktivierter Ton, saurer Ton, Aluminiumborat, Bentonit, Kaolin, Talk oder Silicat ist.

4. Verfahren nach einem der Ansprüche 1 bis 3, wobei das Alkalimetall oder das Erdalkalimetall in dem Katalysator aus einer Alkalimetallverbindung oder dem Katalysator aus einer Erdalkalimetallverbindung in einem Reaktionsgemisch eluiert wird.

5. Verfahren nach einem der Ansprüche 1 bis 4, wobei die Polyhydroxycarbonsäure ein Gewichtsmittelmolekulargewicht von 50.000 oder darüber aufweist.

6. Verfahren nach einem der Ansprüche 1 bis 5, wobei die Polyhydroxycarbonsäure eine Polyhydroxycarbonsäure ist, die ein Gewichtsmittelmolekulargewicht von 50.000 oder darüber aufweist und 0,03-10 Gew.-% eines Katalysators aus einer anorganischen, festen Säure trägt.

7. Verfahren nach Anspruch 5 oder 6, wobei das Gewichtsmittelmolekulargewicht 50.000-300.000 beträgt.

## Revendications

1. Procédé de préparation d'un poly(acide hydroxycarboxylique), qui comporte le fait d'effectuer la polycondensation d'un acide hydroxycarboxylique ou d'un oligomère d'un tel acide, en présence d'un catalyseur acide inorganique solide combiné à un composé catalyseur à base d'un métal alcalin ou d'un métal alcalino-terreux.

2. Procédé conforme à la revendication 1, dans lequel le catalyseur acide inorganique solide est un catalyseur qui est principalement constitué de silice ou d'alumine.

3. Procédé conforme à la revendication 1, dans lequel le catalyseur acide inorganique solide est un silicate d'aluminium, un gel de silice, une zéolite, un oxyde d'aluminium, un silicate de magnésium, une argile activée, une argile acide, du borate d'aluminium, de la bentonite, du kaolin, du talc ou un silicate.

4. Procédé conforme à l'une des revendications 1 à 3, dans lequel le métal alcalin ou alcalino-terreux du composé catalyseur à base de métal alcalin ou de métal alcalino-terreux est élué dans le mélange réactionnel.

5. Procédé conforme à l'une des revendications 1 à 4, dans lequel la masse molaire moyenne en poids du poly(acide hydroxycarboxylique) est supérieure ou égale à 50 000.

6. Procédé conforme à l'une des revendications 1 à 5, dans lequel le poly(acide hydroxycarboxylique) est un poly(acide hydroxycarboxylique) dont la masse molaire moyenne en poids est supérieure ou égale à 50 000 et qui renferme de 0,03 à 10 % en poids de catalyseur acide inorganique solide.

7. Procédé conforme à la revendication 5 ou 6, dans lequel la masse molaire moyenne en poids du poly(acide hydroxycarboxylique) vaut de 50 000 à 300 000.
